# EUROPEAN PATENT APPLICATION

(11) **EP 4 318 697 A1**
(43) Date of publication of application: **07.02.2024**
(21) Application number: 22904572.9
(22) Date of filing: 02.12.2022
(51) Int. Cl.: H01M 10/04

(54) **ELECTRODE ASSEMBLY, MANUFACTURING METHOD THEREFOR, AND BATTERY CELL COMPRISING SAME**

(30) Priority: 06.12.2021 KR 20210173204; 01.12.2022 KR 20220165842
(71) Applicant: LG ENERGY SOLUTION, LTD., Seoul 07335 (KR)
(72) Inventor: JEONG, Hyeok, Daejeon 34122 (KR); JANG, Seokhoon, Daejeon 34122 (KR); JUNG, Su Taek, Daejeon 34122 (KR); BAE, Sangho, Daejeon 34122 (KR)
(74) Representative: Goddar, Heinz J.
(86) International application number: PCT/KR2022/019462
(87) International publication number: WO 2023/106742

(57) **Abstract**

An electrode assembly according to one embodiment of the present disclosure includes a cell stack in which electrodes and separators are alternately stacked, an adhesive layer formed on a side surface of the cell stack, and a finished separator which wraps the periphery of the cell stack on which the adhesive layer is formed, wherein the adhesive layer comprises a laser absorption type adhesive.

## Description

### [TECHNICAL FIELD]

### Cross Citation with Related Application(s)

This application claims the benefit of Korean Patent Application No. 10-2021-0173204 filed on December 6, 2021 and Korean Patent Application No. 10-2022-0165842 filed on December 1, 2022 in the Korean Intellectual Property Office, the entire contents of which are incorporated herein by reference.

The present disclosure relates to an electrode assembly, a manufacturing method thereof and a battery cell including the same, and more particularly, to an electrode assembly whose stiffness is supplemented, a manufacturing method thereof and a battery cell including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

The secondary battery may be classified based on the shape of a battery case into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet type positive electrodes and long sheet type negative electrodes are rolled with a separator being interposed between the positive electrode and the negative electrode, a stacked (laminated) type structure in which pluralities of positive electrodes and negative electrodes, cut into predetermined unit sizes, are sequentially stacked with separators being interposed between the positive electrodes and the negative electrodes, or the like. In recent years, in order to solve problems caused by the j elly-roll type electrode assembly and the stacked type electrode assembly, there has been developed a stacking/folding type electrode assembly, which is a combination of the jelly-roll type electrode assembly and the stacked type electrode assembly.

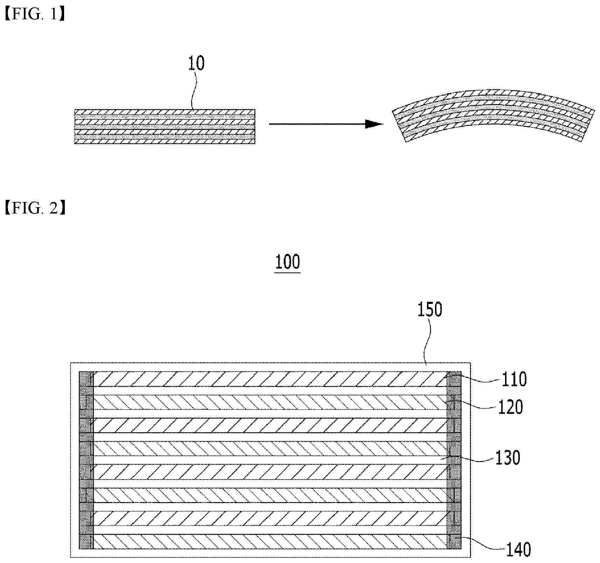

FIG. 1 is a diagram showing a state in which an electrode assembly sags due to gravity.

The electrode assembly 10 is a stacked type electrode assembly, and is mainly formed by stacking a positive electrode, a separator, a positive electrode, and a separator, or sequentially stacking a positive electrode, a separator, a negative electrode, and a separator. The electrode assembly 10 is transported for welding of electrode tabs and welding of electrode tabs-electrode leads after the above-mentioned stacking process. At this time, a sagging phenomenon as shown in FIG. 1 may occur in the electrode assembly 10 due to the size and weight of the electrode assembly 10.

When a sagging phenomenon occurs in the electrode assembly 10, it may be difficult to transport the electrode assembly 10 for subsequent processes, and defects may occur in battery cells manufactured through subsequent processes. Conventionally, a method of supplementing the stiffness of the electrode assembly 10 has been devised by a pressing process of pressing the electrode assembly 10 or by laminating each unit cell forming the electrode assembly. However, the above-mentioned method has the problem that it cannot be applied to inexpensive separators and cannot be applied to various products.

### [DETAILED DESCRIPTION OF THE INVENTION]

### [Technical Problem]

It is an object of the present disclosure to provide an electrode assembly whose overall stiffness is enhanced, a manufacturing method thereof and a battery cell including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided an electrode assembly comprising: a cell stack in which electrodes and separators are alternately stacked, an adhesive layer formed on a side surface of the cell stack, and a finished separator which wraps the periphery of the cell stack on which the adhesive layer is formed, wherein the adhesive layer comprises a laser absorption type adhesive.

The laser absorption type adhesive may comprise a laser marking material that responds to a laser.

The laser marking material may be capable of absorbing laser energy transmitted through the finished separator.

The laser marking material may comprise a SnO₂ (tin oxide)-based material.

The laser marking material may further comprise a Sb (antimony) and/or In (indium)-doped material that is doped in the SnO₂ (tin oxide)-based material.

An average particle size value of the laser marking material may correspond to the wavelength value of the laser.

The adhesive layer may be formed on a side surface where a long side of the separator is located among the side surfaces of the cell stack.

The separator may have a zigzag shape formed by bending a rectangular sheet.

According to another embodiment of the present disclosure, there is provided a manufacturing method of an electrode assembly, the method comprising the steps of: forming a cell stack in which electrodes and separators are alternately stacked, applying an adhesive to a side surface of the cell stack, wrapping a periphery of the cell stack to which the adhesive is applied with a finished separator, irradiating a laser to the outside of the finished separator, and curing the adhesive by the laser to form an adhesive layer.

The wavelength value of the laser may be selected in accordance with the characteristics of the finished separator.

The adhesive may comprise a laser marking material that responds to a laser.

The cell stack may comprise a zigzag-shaped separator.

According to yet another embodiment of the present disclosure, there is provided a battery cell comprising the above-mentioned electrode assembly.

### [Advantageous Effects]

According to the embodiments, the electrode assembly of the present disclosure, a manufacturing method thereof, and a battery cell including the same can improve the overall stiffness by including an adhesive layer on both side surfaces of the electrode assembly.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a diagram showing a state in which an electrode assembly sags due to gravity.
FIG. 2 is a diagram showing an electrode assembly according to one embodiment of the present disclosure;
FIGS. 3 and 4 are diagrams showing a manufacturing process of an electrode assembly according to one embodiment of the present disclosure;
FIG. 5 is a flowchart of a manufacturing method of an electrode assembly according to one embodiment of the present disclosure; and
FIG. 6 is a graph showing optical characteristics of a separator included in an electrode assembly according to one embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, an electrode assembly according to one embodiment of the present disclosure will be described.

FIG. 2 is a diagram showing an electrode assembly according to one embodiment of the present disclosure.

Referring to FIG. 2, the electrode assembly 100 of the present embodiment is a chargeable/dischargeable power generation device, and may include electrodes 110 and 120 and a separator 130. The electrodes 110 and 120 included in the electrode assembly 100 may include a positive electrode 110 and a negative electrode 120, and a separator 130 is interposed between the respective electrodes 110 and 120, so that the electrode assembly 100 can have a structure in which a positive electrode 110 / separator 130 / negative electrode 120 are alternately stacked. Here, the positions of the positive electrode 110 and the negative electrode 120 shown in FIG. 2 are shown for the shake of convenience, and the positions can be changed with each other.

Here, the separator 130 may have a zigzag shape formed by bending a rectangular separator sheet. In other words, the electrode assembly 100 of the present embodiment may be formed by sequentially stacking the electrodes 110 and 120 and the separator 130 that are cut in accordance with a predetermined size, but may be formed by interposing the positive electrode 110 or the negative electrode 120 into the separator 130 bent in a zigzag pattern. More specifically, the separator 130 may be folded in a direction covering the positive electrode 110 in a state in which the positive electrode 110 is stacked, and may be folded in a direction covering the negative electrode 120 in a state where the negative electrode 120 is stacked on the separator 130 covering the positive electrode 110. After that, the separator 130 can be folded in a direction covering the positive electrode 110 in a state in which the positive electrode 110 is stacked on the separator 130 covering the negative electrode 120. In this way, the electrode assembly 100 can be formed by repeatedly performing stacking of the electrodes 110 and 120 and folding of the separator 130 .

Meanwhile, in order to prevent a sagging phenomenon of the electrode assembly 100, conventionally, attempts have been made to supplement the stiffness of the electrode assembly 100 through a pressing process or a lamination process. However, when the separator 130 used in the electrode assembly 100 is an inexpensive separator, the above-mentioned process cannot be applied, and even when the process is applicable, there is a problem that the electrode assembly 100 is damaged by a pressing process or a lamination process to which pressure or heat is applied.

However, the electrode assembly 100 of the present embodiment includes the adhesive layer 140 formed on its side surface, thereby capable of supplementing the stiffness of the electrode assembly 100. The electrode assembly 100 of the present embodiment can improve the stiffness of the electrode assembly 100 while omitting the process of applying pressure or heat to the electrode assembly 100, and also can include an inexpensive separator.

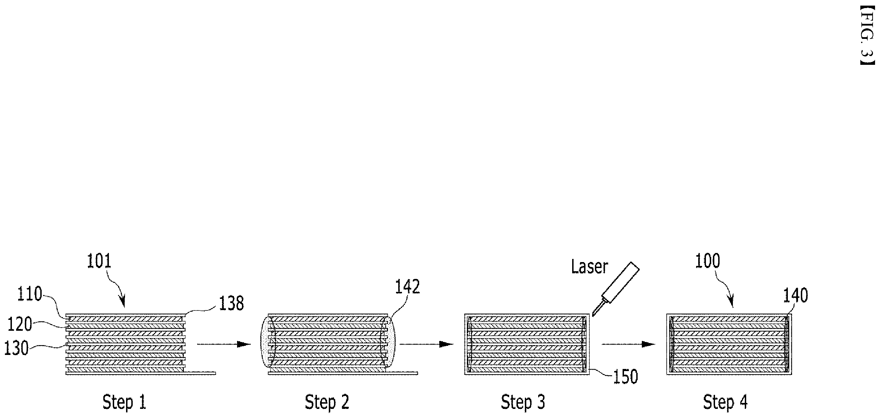

The adhesive layer 140 may be formed on a side surface of the cell stack 101 (see FIG. 3 ) in which the electrodes 110 and 120 and the separator 130 are alternately stacked. Here, the cell stack 101 may mean a stack of the electrodes 110 and 120 and the separator 130 in the electrode assembly 100 of the present embodiment. Further, the side surface of the cell stack 101 herein may refers to a surface where the ends of the plurality of electrodes 110 and 120 and/or the separator 130 are exposed in the cell stack 101 in which the electrodes 110 and 120 and the separator 130 are alternately stacked.

The adhesive layer 140 may be in contact with the separator 130. When manufacturing the electrode assembly 100, the size of the separator 130 may be provided larger than the size of the electrodes 110 and 120, and edges of the separator 130 may protrude beyond ends of the electrodes 110 and 120. Here, the edge of the protruding separator 130 may be referred to as an 'extension part 138 (see FIG. 3)'.

Moreover, even when the electrode assembly 100 is formed through zigzag stacking, edges of the separator 130 may protrude beyond ends of the electrodes 110 and 120. In the electrode assembly 100 formed by stacking in zigzag, one end of both ends of the electrodes 110 and 120 may be covered by the separator 130, and the other end may not be covered by the separator 130. At this time, when the sizes of the positive electrode 110 and the negative electrode 120 are different, the extension part 138 may be easily formed in the separator 130 located on the upper and lower surfaces of the relatively small-sized electrodes 110 and 120. Alternatively, the portion of the separator 130 covering the ends of the electrodes 110 and 120 may be referred to as an extension part 138.

When the extension part 138 is formed on the separator 130, the adhesive layer 140 can be in contact with the extension part 138 of the separator 130 that is not in contact with the electrodes 110 and 120, thereby capable of fixing the shape of the separator 130. The separator 130 and another separator 130 adjacent thereto may be fixed to each other by the adhesive layer 140.

Meanwhile, the adhesive layer 140 is shown as being in contact with the positive electrode 110 in FIG. 2, but it may be preferable for the adhesive layer 140 to be not in contact with the positive electrode 110. This may be because the adhesive layer 140 hinders the flow of ions moving from the positive electrode 110 to the negative electrode 120. In addition, it is preferable that the adhesive layer 140 is not in contact with the negative electrode 120, but the negative electrode 120 is not a direct charging area, and thus, may have less influence than contact between the positive electrode 110 and the adhesive layer 140.

The adhesive layer 140 may be formed on all side surfaces of the electrode assembly 100, but may be preferably formed only on some side surfaces. This may be because gas discharge of the electrode assembly 100 is hindered by the adhesive layer 140 during electrolyte impregnation or activation process of the electrodes 110 and 120, if the adhesive layer 140 is formed on all side surfaces of the electrode assembly 100.

The adhesive layer 140 may be formed to entirely cover one side surface of the electrode assembly 100, or may be formed to partially cover one side surface thereof. If the adhesive layer 140 does not entirely cover the side surfaces of the electrode assembly 100, gas discharge of the electrode assembly 100 may be prevented from being hindered by the adhesive layer 140 during electrolyte impregnation or activation process of the electrodes 110 and 120.

The adhesive layer 140 may be formed on a surface where the long side of the electrodes 110 and 120 or the separator 130 is located among the side surface of the electrode assembly 100 or the cell stack 101. The adhesive layer 140 may be formed on the long side of the electrodes 110 and 120 or the separator 130. This may be because a sagging phenomenon occurs more frequently along the long side, which is relatively longer than the short side of the electrodes 110 and 120 or the separator 130. However, this description does not completely exclude that the adhesive layer 140 can be formed on the short sides of the electrodes 110 and 120 or the separator 130.

Meanwhile, if the adhesive layer 140 is formed on the side surface of the cell stack 101, one surface of the adhesive layer 140 is in contact with the cell stack 101, but the other surface of the adhesive layer 140 has no adhesive surface in contact therewith, and has relatively weak stiffness, so that the effect due to the adhesive layer 140 cannot be fully exhibited.

The electrode assembly 100 of the present embodiment may include a finished separator 150 for providing an adhesive surface to the adhesive layer 140 and supplementing the overall stiffness of the electrode assembly 100. The finished separator 150 may wrap the periphery of the cell stack 101. The finished separator 150 surrounds the periphery of the cell stack 101 as a whole and thus can wrap the side surface of the cell stack 101 once. In addition, the finished separator 150 surrounds the periphery of the cell stack 101 two or more times and thus, can wrap the side surface of the cell stack 101 more than once.

The finished separator 150 may be identical to the separator 130 described above. For example, when manufacturing the electrode assembly 100 using a zigzag stacking method, the separator 130 folded to cover the outermost electrodes 110 and 120 is finally cut in accordance with a predetermined size. Prior to cutting the separator 130, the separator 130 can rotate once and wrap around the periphery of the cell stack 101. At this time, the separator 130 surrounding the periphery of the cell stack 101 may be referred to as a finished separator 150.

The finished separator 150 may be located outside the adhesive layer 140. The finished separator 150 may be fixed to the cell stack 101 by the adhesive layer 140. One surface of the adhesive layer 140 is in contact with the cell stack 101, and the other surface of the adhesive layer 140 may be in contact with the finished separator 150. The adhesive layer 140 is located between the cell stack 101 and the finished separator 150, so that one surface of the adhesive layer 140 is supported by the cell stack 101, and the other side may be supported by the finished separator 150. Thereby, the effect of the adhesive layer 140 that improve the stiffness and durability of the electrode assembly 100 can be more largely exhibited.'

On the other hand, the adhesive layer 140 may be formed by applying an adhesive such as adhesive resin. However, if the adhesive is a material that cures at room temperature, it can be cured immediately after being applied, and thus, there may be a problem that the adhesive layer 140 is not adhered to the finished separator 150. Therefore, the adhesive layer 140 of the present embodiment can be cured after the finished separator 150 wraps the cell stack 101, whereby an adhesive surface between the cell stack 101 and the adhesive layer 140 or between the adhesive layer 140 and the finished separator 150 can be formed. However, in the above example, since the adhesive layer 140 is covered by the finished separator 150, there may be limitations on the method of curing the adhesive layer 140. For example, UV may not be able to penetrate the finished separator 150, in which case the use of UV curable adhesives may not be possible

A laser may be used for curing the adhesive layer 140 of the present embodiment, and the wavelength or the like of the laser may be selected in accordance with the characteristics of the finished separator 150. The wavelength or output of the laser may be selected within a range that that does not damage the finished separator 150 even while permeating the finished separator 150.

The adhesive layer 140 can use a laser absorption type adhesive which absorbs a laser and whose adhesive component is activated or cured by the laser. The laser absorption type adhesive may include a laser marking material that responds to a laser. The laser marking material can be activated by a laser of a specific wavelength. The laser marking material can be activated to thereby generate heat, and such heat can activate the adhesive component of the adhesive or cure the adhesive. The laser marking material can act as an initiator in this way. The adhesive is cured via the laser, so that the adhesive layer 140 allows the side surface of the cell stack 101 and the finished separator 150 to be fixed to each other and adhered to each other.

Meanwhile, after the laser absorption type adhesive used for the adhesive layer 140 is applied to the side surface of the cell stack 101, a predetermined time interval may exist until the finished separator 150 wraps the periphery of the cell stack 101, which causes the adhesive in the state before curing to flow in the direction of gravity. Therefore, the laser absorption type adhesive used in this embodiment may be provided in a highly viscose state to prevent outflow after application, and for example, it may have a viscosity of 90,000 to 110,000 cP at 25°C.

The laser absorption type adhesive used in the adhesive layer 140 can be prepared using an adhesive polymer, an organic solvent, and a laser marking material as starting materials. The laser absorption type adhesive may contain 0.1 to 0.5 parts by weight of the laser marking material based on 50 parts by weight of the adhesive polymer. If the laser marking material is contained in an amount of less than 0.1 part by weight, the amount of laser absorption of the laser absorption type adhesive is low, which may make it difficult to cure the adhesive or activate the adhesive component, and if it is contained in an amount of more than 0.5 parts by weight, the dispersibility of the laser marking material and the resin may decrease or the viscosity of the electrolyte may increase due to the laser marking material.

In addition, the type of laser marking material included in the adhesive layer 140 may be selected according to a wavelength value of a laser used for curing the adhesive layer 140. The laser marking material may be selected so as to have an average particle size value similar to the wavelength value of the laser used. The average particle size value of the laser marking material may correspond to the laser wavelength value. Here, correspondence means that even if the laser wavelength value and the average particle size value do not completely match, it can be explained as 'corresponding' if it has an error within a predetermined range, for example within 100 nm. As a specific example, when the wavelength value of the laser is 900 nm to 1200 nm, the laser marking material may be selected so as to have an average particle size of 800 nm to 1300 nm.

Next, a manufacturing method of an electrode assembly according to one embodiment of the present disclosure will be described.

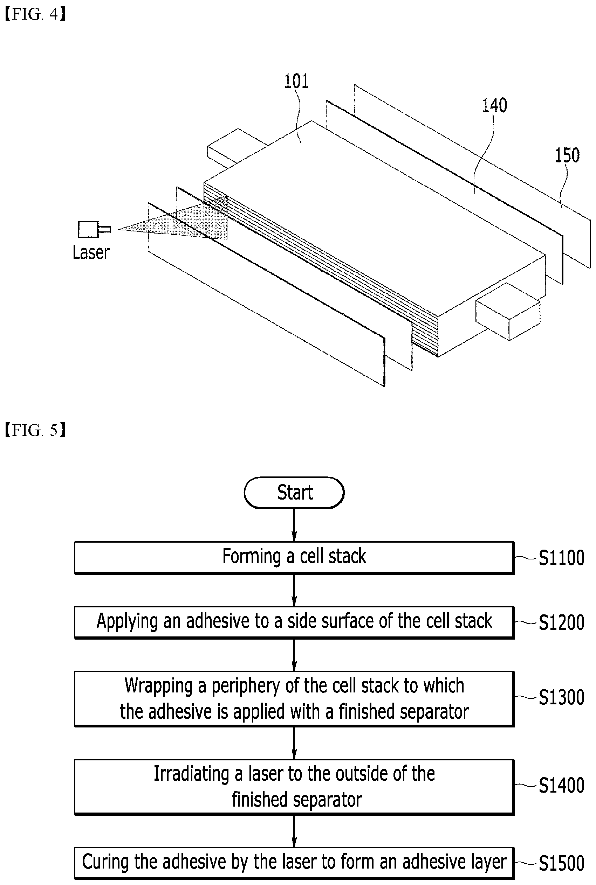

FIGS. 3 and 4 are diagrams showing a manufacturing process of an electrode assembly according to one embodiment of the present disclosure. FIG. 5 is a flowchart of a manufacturing method of an electrode assembly according to one embodiment of the present disclosure.

Referring to FIGS. 3 to 5, the manufacturing method (S 1000) of the electrode assembly of the present embodiment may comprise,
a step of forming a cell stack 101 in which electrodes 110 and 120 and separators 130 are alternately stacked (S 1100);
a step of applying an adhesive 142 to a side surface of the cell stack 101 (S1200),
a step of wrapping the periphery of the cell stack 101 to which the adhesive 142 is applied with a finished separator 150 (S1300),
irradiating a laser to the outside of the finished separator 150 (S1400), and
curing the adhesive 142 by the laser to form an adhesive layer 140 (S1500).

In the step of forming the cell stack 101 (S1100), any known method can be used as long as the electrodes and the separators are stacked in the order of the positive electrode 110, separator 130, negative electrode 120, separator 130, or in the order of the negative electrode 120, separator 130, positive electrode 110 and separator 130. For example, the cell stack 101 may be manufactured in a stack shape, or may be manufactured in a zigzag shape. Step (S 1100) can be described with reference to 'step 1' in FIG. 3.

In the step of applying the adhesive 142 to a side surface of the cell stack 101 (S1200), any known method can be used as a method of applying the adhesive 142. For example, the adhesive 142 may be applied pneumatically or piezoelectrically. In addition, the adhesive 142 may be applied in a dot form through a spot application method or applied in a line form through a line application method. Meanwhile, in order to prevent the applied adhesive 142 from flowing down, the adhesive 142 may be provided in a highly viscous state, and for example, it may have a viscosity of 90,000 to 110,000 cP at 25°C. Step (S1200) can be described with reference to 'step 2' in FIG. 3.

In the step of wrapping the peripheral of the cell stack 101 to which the adhesive 142 is applied with the finished separator 150 (S1300), the finished separator 150 may be identical to the separator 130. For example, when the cell stack 101 is formed through a zigzag stacking method, the separator 130 covers one surface of the outermost electrodes 110 and 120, and then may wrap the periphery of the cell stack 101 before being cut. At this time, the separator 130 wrapping the peripheral of the cell stack 101 may be referred to as a finished separator 150. While the finished separator 150 wraps the periphery of the cell stack 101, a certain or more force may be applied to the cell stack 101, whereby the adhesive 142 can be stably located between the cell stack 101 and the finished separator 150. Steps (S1300) and (S1400) can be described with reference to 'step 3' in FIG. 3.

In the step of irradiating a laser to the outside of the finished separator 150 (S1400), a wavelength value or the like of the laser may be selected according to the characteristics of the finished separator 150. The wavelength or output of the laser may be selected within a range that does not damage the finished separator 150 even while penetrating the finished separator 150.

For example, when the separator is an SRS separator containing alumina (Al₃O₂), alumina can scatter or reflect light. Thus, it may be appropriate to use a laser having a wavelength of 900 nm or more or a laser having a wavelength of 900 nm to 1200 nm. Further, since conventional adhesives do not respond to a laser with a wavelength value of 900 nm or more or 900 nm to 1200 nm, the adhesive 142 used in the present embodiment may include a laser marking material that responds to a laser having a wavelength value of 900 nm or more or 900 nm to 1200 nm. The adhesive according to the present embodiment needs to secure a certain level or more of transparency of the adhesive polymer to be applied to the battery cell. In one example, a laser marking material that responds to a laser of 900 nm to 1200 nm may be a SnO₂ (tin oxide)-based material. In this manner, a SnO₂ (tin oxide)-based material is used as a basic structure and a small amount of Sb (antimony), In (indium), and the like can be doped into SnO₂ to increase laser absorption efficiency for light of 900 nm to 1200 nm.

The adhesive 142 is cured by the laser, whereby in the step of forming the adhesive layer 140 (S1500), the laser marking material included in the adhesive 142 can absorb the energy of the irradiated laser. The laser marking material absorbs energy, whereby the adhesive component of the adhesive 142 can be exhibited, and thus, the side surfaces of the cell stack 101 can be sealed. Step (S1500) can be described with reference to 'step 4' in FIG. 3.

Next, experiments for confirming the characteristics of a laser that can be used in the manufacture of the electrode assembly of the present embodiment will be described.

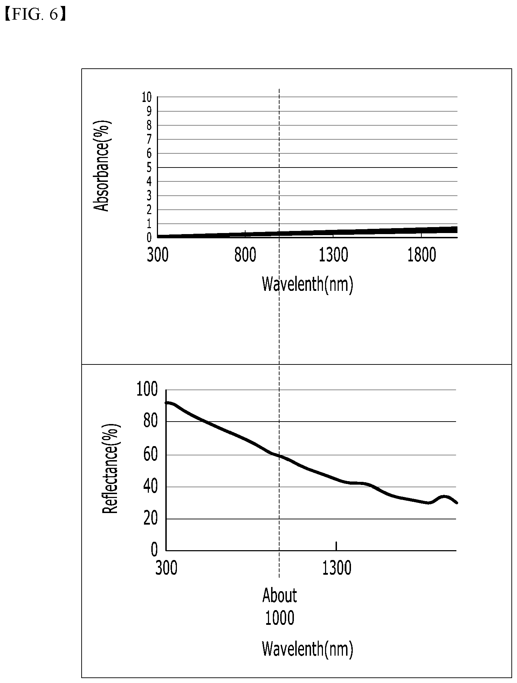

FIG. 6 is a graph showing optical characteristics of a separator included in an electrode assembly according to one embodiment of the present disclosure.

Referring to FIG. 6, when the separator 130 of the present embodiment is an SRS separator, absorbance and reflectance according to the wavelength value of the light source can be confirmed. As described above, the SRS separator includes alumina, and light can be scattered or reflected by alumina. Thus, when the SRS separator is used in the present embodiment, it can be appropriate to use a light source having a wavelength of 900 nm or more or 900 nm to 1200 nm.

Referring to the reflectance graph of FIG. 6, when using a 980nm laser, it can be seen that about 40% of light penetrates the SRS separator at 100% output. Based on this, in this experiment, a 980nm laser was used as a light source, and it was confirmed whether or not damages occur to the separator according to the output level and energy level.

**[Table 1]**

| Line energy (J/mm) | 25% output | 35% output |
|---|---|---|
| 1.25 | Adherable | - |
| 1.75 | Adherable | - |
| 1.94 | Adherable | - |
| 2.19 | Adherable | Separator damaged |
| 2.33 | Adherable | Separator damaged |
| 2.50 | Separator damaged | Separator damaged |
| 2.69 | Separator damaged | - |

Referring to the experimental results in Table 1, it was confirmed that the separator could be damaged depending on the energy level of the 980 nm laser. The line energy herein may be a value obtained by dividing a laser output (J/s) by a scan speed (mm/s). Further, the 25% output or 35% output herein means that the scan speed of the laser is adjusted to set the line energy value shown in Table 1, and the 35% output utilizes a higher output energy than the 25% output.

Specifically, in order to prevent damage to the separator when using a laser having a wavelength of 980 nm, it can be appropriate to irradiate the separator with an energy of less than 2.50 J/mm. Here, the preferred energy level of the laser having a wavelength of 980 nm may be 1.25 J/mm or more and less than 2.50 J/mm, or 1.25 J/mm or more and 2.49 J/mm or less. Here, the energy level described above may be a value based on a case where the output of the laser is 25%.

Experiments on adhesives that can be used for the adhesive layer of the electrode assembly of the present embodiment will be described below.

### [Experimental Example 1]

50 Parts by weight of an adhesive polymer and 0.1 part by weight of a laser marking additive (laser marking material) were dissolved in 200 parts by weight of an organic solvent to prepare a mixture. The mixture was sufficiently stirred using a mechanical stirrer or the like, and then the solvent was dried using a vacuum oven to prepare an adhesive resin. Here, a hot melt adhesive can be used as the adhesive polymer, and specifically, 3762 pellet from 3M can be used. In addition, Iriotec 8850 or Iriotec 8841 from Merck can be used as a laser marking additive, and toluene can be used as an organic solvent.

### [Experimental Example 2]

An adhesive resin was prepared in the same manner as in Experimental Example 1, except that 0.2 part by weight of a laser marking additive was used.

### [Experimental Example 3]

An adhesive resin was prepared in the same manner as in Experimental Example 1, except that 0.3 parts by weight of a laser marking additive was used.

### [Experimental Example 4]

An adhesive resin was prepared in the same manner as in Experimental Example 1, except that 0.4 parts by weight of a laser marking additive was used.

### [Experimental Example 5]

An adhesive resin was prepared in the same manner as in Experimental Example 1, except that 0.5 part by weight of a laser marking additive was used.

### [Comparative Example 1]

An adhesive resin was prepared in the same manner as in Experimental Example 1, except that 0.6 parts by weight of a laser marking additive was used.

### [Comparative Example 2]

An adhesive resin was prepared in the same manner as in Experimental Example 1, except that 0.05 part by weight of a laser marking additive was used.

When the electrode assembly 100 was manufactured using the adhesive resins prepared in Experimental Examples 1 to 5 and Comparative Examples 1 and 2 as an adhesive, the results shown in Table 2 were obtained.

**[Table 2]**

| Category | Laser marking additive (wt. %) | Experimental result |
|---|---|---|
| Experimental Example 1 | 0.1 | Adhesion layer can be formed |
| Experimental Example 2 | 0.2 | Adhesion layer can be formed |
| Experimental Example 3 | 0.3 | Adhesion layer can be formed |
| Experimental Example 4 | 0.4 | Adhesion layer can be formed |
| Experimental Example 5 | 0.5 | Adhesion layer can be formed |
| Comparative Example 1 | 0.6 | Dispersibility with resin is decreased, and electrolyte viscosity is increased by laser marking additive |
| Comparative Example 2 | 0.05 | Sufficient adhesion strength is not secured |

As shown in Table 2, if the laser marking additive is included in an amount of less than 0.1 parts by weight, the laser absorption amount is low, and thus, the adhesive performance activity may not appear at the desired level. In addition, if the laser marking additive is included in an amount of more than 0.5 parts by weight, there is a problem that the dispersibility is deteriorated or the viscosity or concentration of the electrolyte contained in the battery cell is increased due to the laser marking additive. Therefore, in the manufacture of the electrode assembly 100 of the present embodiment, in order for the adhesive layer 140 to be formed and the effect resulting therefrom to be exhibited, it can be appropriate to include 0.1 to 0.5 parts by weight of the laser marking additive based on 50 parts by weight of the adhesive polymer.

Meanwhile, the electrode assembly 100 of the present embodiment described above can be stored in a cell case together with an electrolyte solution and provided as a battery cell.

A battery cell according to one embodiment of the present invention may include an electrode assembly 100 in which a plurality of electrodes and a plurality of separators are alternately stacked, electrode leads that are connected to electrode tabs extending from a plurality of electrodes, and a cell case that seals the electrode assembly in a state where one end of the electrode lead protrudes.

Meanwhile, the above-mentioned battery cell can be stacked in one direction to form a battery cell stack, and can be modularized into a battery module together with a battery management system (BMS) and/or a cooling device that control and manages the battery's temperature, voltage and the like to form a battery pack. The battery pack can be applied to various devices. For example, the device to which the battery pack is applied may be a vehicle means such as an electric bicycle, an electric vehicle, or a hybrid vehicle, but the present disclosure is not limited thereto, and the battery pack according to the present embodiment can be used for various devices in addition to the above illustrations, which also falls within the scope of the present disclosure.

Although the invention has been described in detail above with reference to preferred embodiments thereof, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: electrode assembly
101: cell stack
110: positive electrode
120: negative electrode
130: separator
140: adhesive layer
150: finished separator

## Claims

1. An electrode assembly comprising:
a cell stack in which electrodes and separators are alternately stacked,
an adhesive layer formed on a side surface of the cell stack, and
a finished separator which wraps the periphery of the cell stack on which the adhesive layer is formed,
wherein the adhesive layer comprises a laser absorption type adhesive.

2. The electrode assembly according to claim 1, wherein:
the laser absorption type adhesive comprises a laser marking material that responds to a laser.

3. The electrode assembly according to claim 2, wherein:
the laser marking material is capable of absorbing laser energy transmitted through the finished separator.

4. The electrode assembly according to claim 2, wherein:
the laser marking material comprises a Sn0₂ (tin oxide)-based material.

5. The electrode assembly according to claim 4, wherein:
the laser marking material further comprises a Sb (antimony) and/or In (indium)-doped material that is doped in the SnO₂ (tin oxide)-based material.

6. The electrode assembly according to claim 2, wherein:
an average particle size value of the laser marking material corresponds to the wavelength value of the laser.

7. The electrode assembly according to claim 1, wherein:
the adhesive layer is formed on a side surface where a long side of the separator is located among the side surfaces of the cell stack.

8. The electrode assembly according to claim 1, wherein:
the separator has a zigzag shape formed by bending a rectangular sheet.

9. A manufacturing method of an electrode assembly, the method comprising the steps of:
forming a cell stack in which electrodes and separators are alternately stacked,
applying an adhesive to a side surface of the cell stack,
wrapping a periphery of the cell stack to which the adhesive is applied with a finished separator,
irradiating a laser to the outside of the finished separator, and
curing the adhesive by the laser to form an adhesive layer.

10. The manufacturing method according to claim 9, wherein:
the wavelength value of the laser is selected in accordance with the characteristics of the finished separator.

11. The manufacturing method according to claim 9, wherein:
the adhesive comprises a laser marking material that responds to a laser.

12. The manufacturing method according to claim 9, wherein:
the cell stack comprises a zigzag-shaped separator.

13. A battery cell comprising the electrode assembly as set forth in any one of claims 1-8.
